# EUROPEAN PATENT SPECIFICATION

(11) **EP 2 624 352 B1**
(45) Date of publication and mention of the grant of the patent: **02.01.2019**
(21) Application number: 13152989.3
(22) Date of filing: 29.01.2013
(51) Int. Cl.: H01M 8/0612, H01M 8/04014, H01M 8/04007, H01M 8/04089, H01M 8/2475, H01M 8/249, H01M 8/04082

(54) **FUEL CELL APPARATUS**
BRENNSTOFFZELLENVORRICHTUNG
APPAREIL DE PILE À COMBUSTIBLE

(30) Priority: 31.01.2012 JP 2012018569
(43) Date of publication of application: 07.08.2013
(73) Proprietor: Aisin Seiki Kabushiki Kaisha, Aichi 448-8650 (JP); Kyocera Corporation, Kyoto-shi, Kyoto 612-8501 (JP)
(72) Inventor: Matsuda, Kunio, Kariya-shi, Aichi 448-8650 (JP); Ono, Takashi, Kyoto-shi, Kyoto 612-8501 (JP); Nakamura, Mitsuhiro, Kyoto-shi, Kyoto 612-8501 (JP)
(74) Representative: TBK

(56) References cited:
- EP-A1- 1 909 349
- JP-A- 2010 055 917
- JP-A- 2010 238 430
- JP-A- 2011 173 751
- US-A1- 2010 119 906

## Description

### TECHNICAL FIELD

The disclosure generally relates to a fuel cell apparatus including a reformer reforming source gas to thereby generate anode gas.

### BACKGROUND DISCUSSION

Known fuel cell apparatuses are disclosed, for example, in JP 2010 055917 A and JP 2008 243589 A (which will be hereinafter referred to as References 1 and 2). Each of the known fuel cell apparatuses includes a reformer generating anode gas, which includes hydrogen, by reforming source gas (i.e., fuel gas), a stack (i.e., a fuel cell stack) to which the anode gas generated by the reformer and cathode gas are supplied and which generates electricity by the supplied anode gas and the supplied cathode gas, a combustion portion heating the reformer to a temperature range suitable for a reforming reaction by burning anode-off gas discharged from the stack, an exhaust gas flow passage through which combustion exhaust gas generated by combustion of the anode-off gas in the combustion portion is discharged to an outside of the fuel cell apparatus, and a cathode gas flow passage member which extends in an upward and downward direction and through which the cathode gas to be supplied to the stack flows. In the known fuel cell apparatus, an exhaust gas intermediate flow passage is formed between the reformer and the cathode gas flow passage member so as to bring the combustion portion and the exhaust gas flow passage into communication with each other. The combustion exhaust gas at high temperature is discharged from the combustion portion via the exhaust gas intermediate flow passage to the exhaust gas flow passage. When viewed in a vertical cross section of the fuel cell apparatus (i.e., in a cross section taken along a vertical direction of the fuel cell apparatus), the reformer, the stack, the combustion portion, the exhaust gas flow passage, and the cathode gas flow passage member are symmetrically formed relative to the vertical direction.

According to References 1 and 2, for example, in a case where assembling errors occur at the timing of assembling of the fuel cell apparatus or in a case where strain because of thermal expansion or thermal deformation is generated during an operation of the fuel cell apparatus, a relative position between the cathode gas flow passage member and the reformer may shift, therefore varying a flow passage width of the exhaust gas intermediate flow passage.

Thus, in a case where the flow passage width of the exhaust gas intermediate flow passage varies, a flow rate per unit time of the combustion exhaust gas flowing from the combustion portion via the exhaust gas intermediate flow passage to the exhaust gas flow passage may largely deviate from a normal value. As a result, combustion characteristics of the anode-off gas in the combustion portion may deteriorate. Thus, the combustion characteristics in the combustion portion deteriorate; therefore, a temperature of the reformer heated by the combustion in the combustion portion may not be consistently stable. In addition, a power generation reaction of the stack may deteriorate.

Other known fuel cell apparatuses are disclosed in JP 2010 238430 A, US 2010/119906 A1 and JP 2010 055917 A. Each of these fuel cell apparatuses includes the features set out in the preamble of claim 1.

A need exists for a fuel cell apparatus which may surely discharge combustion exhaust gas generated by combustion in a combustion portion, which may secure stable combustion characteristics in the combustion portion, which may maintain a reformer at a stable temperature, and which may realize a stable power generation performance of a stack even in a case where assembling errors occur at the timing of assembling of the fuel cell apparatus or even in a case where strain because of thermal expansion or thermal deformation is generated during an operation of the fuel cell apparatus.

### SUMMARY

According to an aspect of this disclosure, a fuel cell apparatus includes the features set out in claim 1.

According to the fuel cell apparatus of the disclosure, the restriction protrusions restrict the relative position between the cathode gas flow passage member and the reformer in the direction perpendicular to the vertical direction of the housing in the cross section taken along the vertical direction, thereby restricting the variation of the first flow passage width of the first intermediate exhaust gas flow passage formed between the reformer and the cathode gas flow passage member.

According to the fuel cell apparatus configured as described above, even in a case where assembling errors occur at the timing of assembling of the fuel cell apparatus or even in a case where strain because of thermal expansion or thermal deformation is generated during an operation of the fuel cell apparatus, the restriction protrusion restricts the relative position between the cathode gas flow passage member and the reformer in the direction perpendicular to the vertical direction. In other words, even in an occurrence of excessive assembling errors or strain, the restriction protrusion makes contact with the cathode gas flow passage member and/or the reformer. Therefore, the restriction protrusion may restrict the relative position between the cathode gas flow passage member and the reformer. Consequently, the restriction protrusion may restrict the variation of the first flow passage width of the first intermediate exhaust gas flow passage formed between the reformer and the cathode gas flow passage member.

Thus, a flow rate per unit time of exhaust gas flowing from the first intermediate exhaust gas flow passage to the exhaust gas flow passage may be restricted from drastically varying. As a result, combustion characteristics of the anode-off gas in the combustion portion may be stable; thereby, a temperature of the reformer heated by the combustion in the combustion portion may be stable. Therefore, a concentration of hydrogen of the anode gas generated by the reformer may be stable. In addition, a power generation reaction of the fuel cell stack may be stable.

According to the fuel cell apparatus of the disclosure, the restriction protrusions are symmetrically formed relative to the center line. Accordingly, even in a case where assembling errors occur at the timing of assembling of the fuel cell apparatus or even in a case where strain because of thermal expansion or thermal deformation is generated during an operation of the fuel cell apparatus, the relative position between the cathode gas flow passage member and the reformer may be effectively restricted. In addition, the variation of the first flow passage width of the first intermediate exhaust gas flow passage may be effectively restricted.

According to a further aspect of the disclosure, a width of the restriction protrusion is designed to be smaller at a first side adjacent to the reformer than at a second side provided at the cathode gas flow passage member.

For example, in the occurrence of excessive assembling errors or strain, the restriction protrusion makes contact with the reformer. In such case, heat of the reformer and/or the cathode gas flow passage member may transmit via the restriction protrusion. Even in such case, according to the fuel cell apparatus of the disclosure, the width of the restriction protrusion is designed to be smaller at the first side adjacent to the reformer than at the second side provided at the cathode gas flow passage member; thereby, the transmission of the heat via the restriction protrusion may be restricted. As a result, the heat of the reformer and/or the cathode gas flow passage member is restricted from being removed via the restriction protrusion.

According to another aspect of the disclosure, the fuel cell apparatus further includes a heat insulating layer arranged at an opposite side of the cathode gas flow passage member from the reformer, and a second intermediate exhaust gas flow passage formed between the reformer and the heat insulating layer to bring the combustion portion and the exhaust gas flow passage into communication with each other, the second intermediate exhaust gas flow passage through which the combustion exhaust gas generated by the combustion of the anode-off gas in the combustion portion is discharged to the exhaust gas flow passage, the second intermediate exhaust gas flow passage including a second flow passage width in the cross section.

According to the aforementioned configuration, the combustion exhaust gas generated by the combustion of the anode-off gas in the combustion portion is discharged from the second intermediate exhaust gas flow passage to the exhaust gas flow passage.

According to a further aspect of the disclosure, the first flow passage width of the first intermediate exhaust gas flow passage and the second flow passage width of the second intermediate exhaust gas flow passage are set to be any one of a relation that the first flow passage width is equal to the second flow passage width, a relation that the first flow passage width is greater than the second flow passage width, and a relation that the first flow passage width is smaller than the second flow passage width.

The extent of preheating the cathode gas flowing through the cathode gas flow passage member (a temperature of the cathode gas to be supplied to a cathode of the fuel cell stack) influences the cathode of the fuel cell stack. The extent of preheating the cathode gas further influences a temperature of the fuel cell stack and durability thereof.

For example, in a condition where the first flow passage width is equal to the second flow passage width, a flow rate of the exhaust gas discharged from the first intermediate exhaust gas flow passage equals to a flow rate of the exhaust gas discharged from the second intermediate exhaust gas flow passage. Further, for example, in a condition where the first flow passage width is greater than the second flow passage width, the flow rate of the exhaust gas discharged from the first intermediate exhaust gas flow passage may be increased relative to the flow rate of the exhaust gas discharged from the second intermediate exhaust gas flow passage. In such case, an amount of heat of the combustion exhaust gas discharged from the first intermediate exhaust gas flow passage, for preheating the cathode gas in the cathode gas flow passage member (i.e., the cathode gas in a state right before being supplied to the cathode of the fuel cell stack) may be relatively increased. That is, a preheating temperature for preheating the cathode gas may be set to be relatively high.

Furthermore, for example, in a case where the first flow passage width is smaller than the second flow passage width, the flow rate of the exhaust gas discharged from the first intermediate exhaust gas flow passage may be decreased relative to the flow rate of the exhaust gas discharged from the second intermediate exhaust gas flow passage. In such case, an amount of the heat of the combustion exhaust gas for preheating the cathode gas in the cathode gas flow passage member (i.e., the cathode gas in a state right before being supplied to the cathode of the fuel cell stack) may be relatively decreased. That is, a preheating temperature for preheating the cathode gas in a state right before being supplied to the cathode may be set to be relatively low.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a cross sectional view taken along the line I-I in Fig. 2 and along a vertical direction of a fuel cell apparatus according to a first embodiment disclosed here;
Fig. 2 is a top plan view of an inner portion of the fuel apparatus according to the first embodiment disclosed here;
Fig. 3 is a cross sectional view illustrating an enlarged portion of an area in the vicinity of a reformer of the fuel cell apparatus according to the first embodiment disclosed here;
Fig. 4 is a cross sectional view illustrating an area in the vicinity of a restriction protrusion fixed to a cathode gas flow passage member of the fuel cell apparatus according to the first embodiment disclosed here;
Fig. 5 is a cross sectional view illustrating an area in the vicinity of first and second restriction protruding portions of the restriction protrusion, which are fixed to the reformer and the cathode gas flow passage member of the fuel cell apparatus according to a second embodiment disclosed here;
Fig. 6 is a cross sectional view illustrating an area in the vicinity of the restriction protrusions formed at the cathode gas flow passage member of the fuel cell apparatus according to a third embodiment disclosed here;
Fig. 7 is a cross sectional view illustrating an area in the vicinity of the restriction protrusion fixed to the cathode gas flow passage member of the fuel cell apparatus according to a fourth embodiment disclosed here; and
Fig. 8 is a cross sectional view illustrating an area in the vicinity of the restriction protrusion fixed to the cathode gas flow passage member of the fuel cell apparatus according to a fifth embodiment disclosed here.

### DETAILED DESCRIPTION

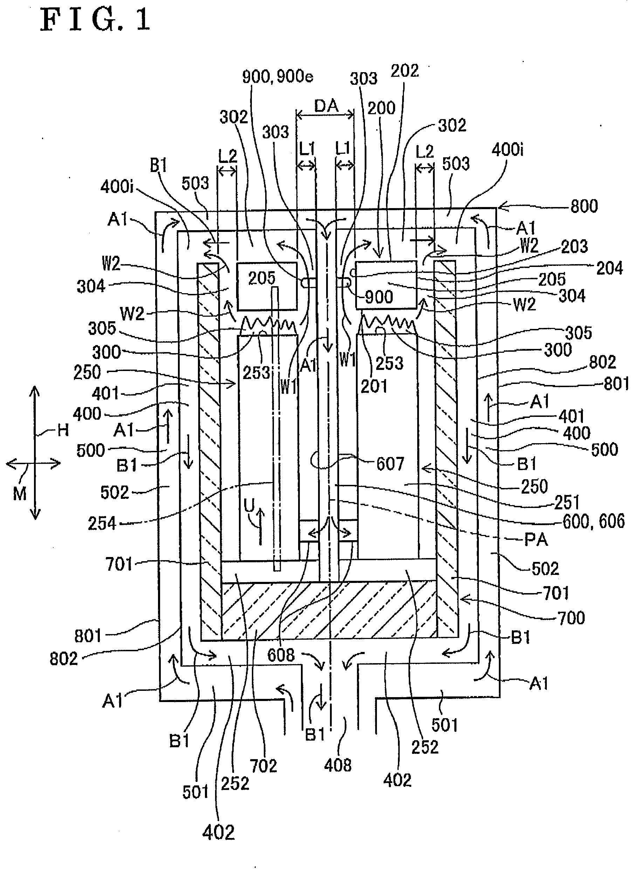

A first embodiment of this disclosure will be described as follows with reference to Figs. 1 to 4. A fuel cell apparatus according to the first embodiment includes a reformer 200 including reforming portions 205 facing each other while keeping a distance DA therbetween, stacks 250 (i.e., fuel cell stacks) of a fuel cell, combustion portions 300, an exhaust gas flow passage 400, a cathode gas flow passage 500, a cathode gas flow passage member 600, a heat insulating layer 700, and a housing 800.

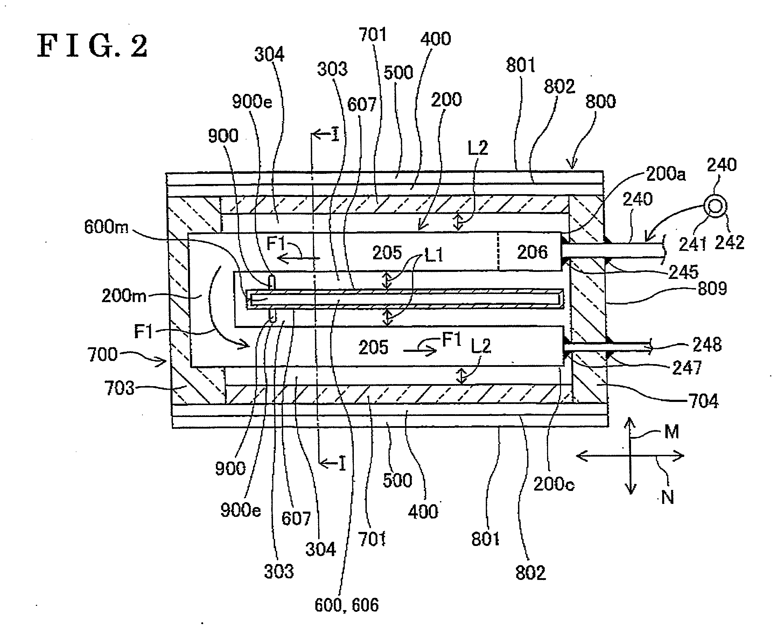

The reforming portions 205 of the reformer 200 reform source gas (i.e., fuel gas) of hydrocarbon by water vapor to thereby generate anode gas mainly including hydrogen. As illustrated in Fig. 2, the reformer 200 is formed in a substantially U-shape opened horizontally in cross section. The reformer 200 includes an evaporating portion 206 and the reforming portions 205 continuously connected to the evaporating portion 206. The evaporating portion 206 is arranged at a starting end 200a of the reformer 200 so as to evaporate water in a liquid-phase for reforming the source gas. The reforming portions 205 are connected to each other by a connecting portion 200m so as to form a substantially U-shape opened horizontally in cross section. A pipe 240 is connected and welded via, for example, welding portions 245 to the evaporating portion 206 and an end plate 809 of the housing 800.

The pipe 240 which is a double tube includes an inner tube 241 and an outer tube 242. The inner tube 241 serves as a water supply passage through which the water for reforming the source gas is supplied. The outer tube 242 serves as a source gas flow passage through which the source gas is supplied. Alternatively, the inner tube 241 may function as the source gas flow passage and the outer tube 242 may function as the water supply passage. The pipe 240 is not limited to the double tube. A tube functioning as the water supply passage and a tube functioning as the source gas flow passage may be separately fixed to the reformer 200 by welding.

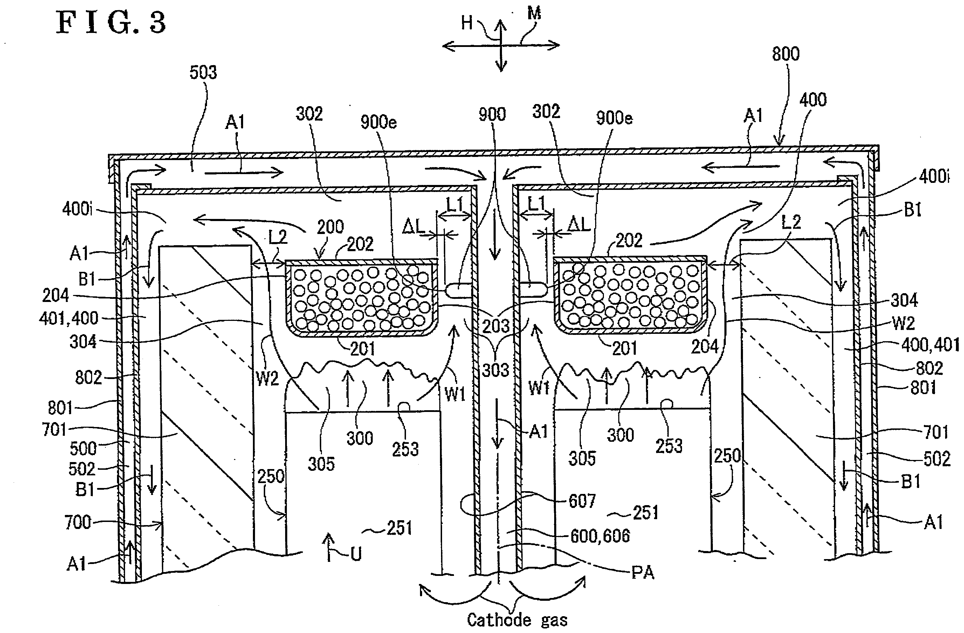

As illustrated in Fig. 3, the reformer 200 formed in a container shape includes a bottom wall 201, an upper wall 202, first side walls 203, and second side walls 204. The reforming portions 205 form a reforming chamber for accommodating a ceramic carrier carrying a reforming catalyst. The ceramic carrier has, for example, a honeycomb or ball shape. As illustrated in Figs. 1 and 3, each of the first side walls 203 faces the cathode gas flow passage member 600 in a state where a first intermediate exhaust gas flow passage 303 is arranged between the first side wall 203 and the cathode gas flow passage member 600. Each of the second side walls 204 faces each of heat insulating side layers 701 of the heat insulating layer 700 in a state where a second intermediate exhaust gas flow passage 304 is arranged between the second side wall 204 and the heat insulating side layer 701.

As illustrated in Fig. 1, the stacks 250 are arranged below the reformer 200. The anode gas generated in the reformer 200 and cathode gas are supplied to the stacks 250; thereby, the stacks 250 generate electricity. Unit cells 251 of the fuel cell, which configure the stacks 250 are solid oxide fuel cells. Each of the unit cells 251 includes an anode, an electrolyte film, and a cathode. The plural unit cells 251 are positioned side by side along a direction perpendicular to a horizontal direction in Fig. 1 (along a direction indicated by an arrow N in Fig. 2) and are arranged at distribution tanks 252. The anode gas generated in the reformer 200 and including hydrogen is supplied via an anode gas flow passage 254 to each of the distribution tanks 252 and is thereafter distributed to a lower portion of the anode of each of the unit cells 251. The anode gas distributed to the lower portion of the anode of the unit cell 251 flows upward in a direction indicated by an arrow U in Fig. 1 while being used for a power generation reaction at an inner portion of the anode. Afterward, the anode gas is discharged from upper surfaces 253 of the stacks 250 to the combustion portions 300.

As illustrated in Fig. 1, the cathode gas flow passage 500 is a passage through which the cathode gas (i.e., a gas including oxidant, or air) flows in a direction Indicated by arrows A1. The cathode gas flow passage 500 is located exterior relative to the exhaust gas flow passage 400 in the housing 800. The exhaust gas flow passage 400 is defined by an outer wall member 801 and an inner wall member 802 of the housing 800. The cathode gas flow passage 500 includes a first flow passage 501 extending along a bottom side of the housing 800, second flow passages 502 extending vertically (in a direction which is indicated by an arrow H in Fig. 1 and which will be referred to as a vertical direction H), and a third flow passage 503 extending in the horizontal direction. An upper portion of the cathode gas flow passage member 600 is in communication with an upper end portion of the third flow passage 503 of the cathode gas flow passage 500; thereby, the cathode gas flow passage member 600 forms a vertical flow passage 606 through which the cathode gas (i.e., a gas including oxidant, or air) to be supplied to the respective cathodes of the unit cells 251 of the stacks 250 flows. The vertical flow passage 606 is positioned at an intermediate area within the housing 800 and is arranged so as to extend in an upward and downward direction of the housing 800 along the vertical direction H. That is, the cathode gas flow passage member 600 including vertical walls 607 is arranged at the intermediate area within the housing 800 so as to extend along the vertical direction H. The cathode gas flows through the cathode gas flow passage member 600 and thereafter flows through an outlet port 608 to a lower portion of the cathode of each of the stacks 250. Afterward, the cathode gas flows upward along the cathode while being used in the power generation reaction in the stack 250.

As illustrated in Fig. 1, each of the combustion portions 300 is formed by a combustion room provided between the upper surface 253 of the stack 250 and the reformer 200. The combustion portion 300 burns anode-off gas which is discharged from the upper surface 253 of the stack 250 after the power generation reaction, forms a combustion flame portion 305 (i.e., generates combustion flame), heats the bottom wall 201 of the reformer 200, and maintains the reformer 200 in a temperature range suitable for a reforming reaction. The anode-off gas includes an unreacted hydrogen (i.e., hydrogen that is not consumed in the power generation reaction in the stack 250), therefore being combustible. As described above, the anode-off gas discharged from the upper surface 253 of the stack 250 generates the combustion flame portion 305 in the combustion portion 300 and thereby heats the reformer 200 to the temperature range suitable for the reforming reaction.

As illustrated in Fig. 1, the exhaust gas flow passage 400 is arranged within the housing 800. Combustion exhaust gas, which is generated by combustion of the anode-off gas in the combustion portion 300, is at high temperature and is discharged through an exhaust port 408 to an outside of the housing 800 in a direction indicated by arrows B1. The exhaust gas flow passage 400 is defined by the inner wall member 802 of the housing 800. The exhaust gas flow passage 400 is positioned Interior relative to the cathode gas flow passage 500 so as to be next thereto and is arranged exterior relative to the heat insulating side layers 701. The exhaust gas flow passage 400 includes first flow passages 401 extending in the vertical direction H and a second flow passage 402 being in communication with the exhaust port 408 and extending along the bottom side of the housing 800. The combustion exhaust gas being at high temperature relative to the cathode gas and the cathode gas being at low temperature relative to the combustion exhaust gas flow toward opposite sides along the horizontal direction as seen in Fig. 1 while a thermal exchange is conducted between the combustion exhaust gas flowing through the exhaust gas flow passage 400 and the cathode gas flowing through the cathode gas flow passage 500.

As illustrated in Figs. 1 and 3, the first intermediate exhaust gas flow passages 303 are provided within the housing 800. Each of the first intermediate exhaust gas flow passages 303 is formed between the first side wall 203 of the reformer 200 and the vertical wall 607 of the cathode gas flow passage member 600 so as to bring the combustion portion 300 and an inlet 400i of the exhaust gas flow passage 400 into communication with each other via an upper space 302 above the upper wall 202 of the reformer 200. The combustion exhaust gas which is generated by the combustion of the anode-off gas in the combustion portion 300 and which is at high temperature is discharged from the first intermediate exhaust gas flow passage 303 through the inlet 400i to the exhaust gas flow passage 400. In addition, as illustrated in Fig. 1, the upper space 302 is formed between the third flow passage 503 of the cathode gas flow passage 500 and the upper wall 202 of the reformer 200. The combustion exhaust gas flows through the first intermediate exhaust gas flow passage 303 and thereafter flows through the upper space 302.

As illustrated in Fig. 1, the heat insulating layer 700 made of a heat insulating material includes the heat insulating side layers 701 each covering an outside of the stack 250 and a heat insulating bottom layer 702 covering the outside (a bottom side) of the stack 250. The second intermediate exhaust gas flow passages 304 are provided within the housing 800. Each of the second intermediate exhaust gas flow passages 304 is arranged between the second side wall 204 of the reformer 200 and the heat Insulating side layer 701. The second intermediate exhaust gas flow passage 304 is positioned between the second side wall 204 and the heat insulating side layer 701 so as to bring the combustion portion 300 and the inlet 400i of the exhaust gas flow passage 400 into communication with each other. The combustion exhaust gas which is generated by the combustion of the anode-off gas in the combustion portion 300 and which is at high temperature is discharged from the second intermediate exhaust gas flow passage 304 through the inlet 400i to the exhaust gas flow passage 400 in a direction indicated by an arrow W2 in each of Figs. 1 and 3 (the direction will be referred to as a direction W2). Thus, the reformer 200 is heated by the combustion exhaust gas not only from the bottom wall 201 but also from the first side walls 203, the second side walls 204, and the upper wall 202. As a result, a temperature of the reformer 200 and the reforming reaction therein may be stable.

As illustrated in Fig. 2, the heat insulating layer 700 includes a first end heat insulating layer 703 and a second end heat insulating layer 704. The pipe 240 formed by the source gas flow passage and the water supply passage is fixed by the welding portions 245 to the end plate 809 of the housing 800 and to the starting end 200a of the reformer 200 formed in the substantially U-shape opened horizontally in cross section. A sensor insertion pipe 248 in which a temperature sensor is positioned is fixed by welding portions 247 to the end plate 809 of the housing 800 and to a terminal end 200c of the reformer 200. The source gas is supplied via the pipe 240 and thereafter flows from the starting end 200a to the terminal end 200c in a direction indicated by arrows F1 (see Fig. 2) while being reformed in the reformer 200. The cathode gas flow passage member 600 is positioned between the reforming portions 205 while being sandwiched by the reforming portions 205 facing each other.

As illustrated in Figs. 1 and 3, restriction protrusions 900 are arranged respectively at the vertical walls 607 of the cathode gas flow passage member 600 so as to protrude in opposite directions from each other. In a direction indicated by an arrow M (i.e., in a direction M) and perpendicular to the vertical direction H in the cross section taken along the vertical direction H of each of Figs. 1 and 3, each of the restriction protrusions 900 restricts a relative position between the cathode gas flow passage member 600 and the reformer 200, thereby restricting or minimizing variations of a first flow passage width L1 of the first intermediate exhaust gas flow passage 303 formed between the cathode gas flow passage member 600 and the first side wall 203 of the reformer 200.

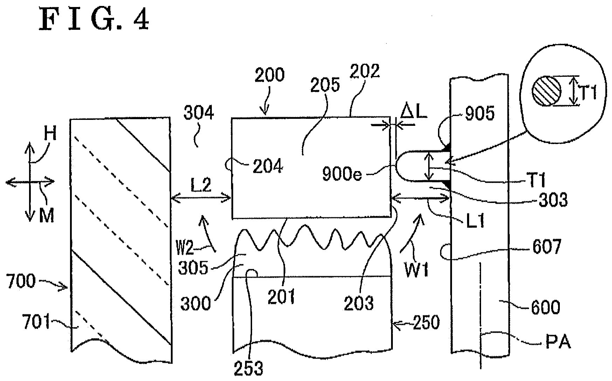

Further, as illustrated in Fig. 1, the housing 800 accommodates the reformer 200, the stacks 250, the combustion portions 300, the cathode gas flow passage 500, the exhaust gas flow passage 400, the cathode gas flow passage member 600, the heat insulating layer 700, the first intermediate exhaust gas flow passages 303, and the second intermediate exhaust gas flow passages 304. According to the first embodiment, each of the restriction protrusions 900 is fixed by a welding portion 905 to the cathode gas flow passage member 600 (see Fig. 4). Alternatively, the restriction protrusion 900 may be fixed to the cathode gas flow passage member 600 by a fixing member, for example, a bolt.

As illustrated in Fig. 4, a width dimension T1 (i.e., thickness dimension) of the restriction protrusion 900 is designed to be smaller at a first side adjacent to the reformer 200 than at a second side located at the cathode gas flow passage member 600. In a cross section taken along a direction perpendicular to a direction in which the restriction protrusion 900 protrudes, the width dimension T1 corresponds to a width of a portion defined by an annular outline of the restriction protrusion 900. In the direction M perpendicular to the vertical direction H (corresponding to a vertical direction of the fuel cell apparatus) in the cross section in each of Figs. 1, 3, and 4, the restriction protrusion 900 may restrict the relative position between the cathode gas flow passage member 600 and the reformer 200, thereby restricting the variations of the first flow passage width L1 of the first intermediate exhaust gas flow passage 303 formed between the cathode gas flow passage member 600 and the first side wall 203 of the reformer 200.

According to the first embodiment, as illustrated in Figs. 1 and 3, the heat insulating side layer 701 is arranged at an opposite side of the cathode gas flow passage member 600 from the reformer 200. The second intermediate exhaust gas flow passage 304 is formed so as to bring the combustion portion 300 and the inlet 400i of the exhaust gas flow passage 400 into communication with each other while being positioned at the heat insulating side layer 701. The second intermediate exhaust gas flow passage 304 is positioned between the second side wall 204 of the reformer 200 and the heat insulating side layer 701. The combustion exhaust gas which is generated by the combustion of the anode-off gas in the combustion portion 300 and which is at high temperature is discharged from the second intermediate exhaust gas flow passage 304 through the inlet 400i to the exhaust gas flow passage 400 in the direction W2 in each of Figs. 1 and 3. Here, in Figs. 1 and 3, a flow passage width of the second intermediate exhaust gas flow passage 304 is defined as a second flow passage width L2.

According to the first embodiment, assembling errors, for example, dimensional errors or misalignments may occur at the time of assembling of the fuel cell apparatus. In addition, strain because of thermal expansion or thermal deformation during an operation of the fuel cell apparatus may occur. Even In such cases, the restriction protrusion 900 restricts the relative position between the cathode gas flow passage member 600 and the reformer 200 in the direction M perpendicular to the vertical direction H. In other words, for example, even in a case where excessive assembling errors or strain may occur, an end 900e of the restriction protrusion 900 formed at the cathode gas flow passage member 600 makes contact with the first side wall 203 of the reformer 200; thereby, the relative position between the cathode gas flow passage member 600 and the reformer 200 is restricted from further shifting in the direction M. Accordingly, even in the occurrence of excessive assembling errors or strain, the restriction protrusion 900 may restrict the relative position between the cathode gas flow passage member 600 and the reformer 200, thereby restricting the variations of the first flow passage width L1 of the first intermediate exhaust gas flow passage 303 formed between the cathode gas flow passage member 600 and the first side wall 203 of the reformer 200. Consequently, in a power generating operation of the fuel cell apparatus, a flow rate per unit time of the exhaust gas flowing from the first intermediate exhaust gas flow passage 303 to the exhaust gas flow passage 400 may be restricted from drastically varying. As a result, combustion characteristics of the anode-off gas in the combustion portion 300 may be stable. Thus, the combustion characteristics in the combustion portion 300 become stable; thereby, a temperature of the reformer 200 heated by the combustion in the combustion portion 300 may be stable. Therefore, a concentration of hydrogen of the anode gas generated by the reformer 200 may be stable. In addition, the power generation reaction of the stack 250 may be stable.

The variations of the first flow passage width L1 of the first intermediate exhaust gas flow passage 303 are restricted as described above, therefore restricting variations of the second flow passage width L2 of the second intermediate exhaust gas flow passage 304. Consequently, a flow rate per unit time of the exhaust gas flowing from the second intermediate exhaust gas flow passage 304 to the exhaust gas flow passage 400 may be restricted from drastically varying. As a result, the combustion characteristics of the anode-off gas in the combustion portion 300 may be stable. Thus, the combustion characteristics in the combustion portion 300 become stable; thereby, the temperature of the reformer 200 heated by the combustion in the combustion portion 300 may be stable.

As illustrated in Fig. 4, the restriction protrusion 900 is arranged at one of the vertical walls 607 of the cathode gas flow passage member 600 and is fixed to the vertical wall 607 by the welding portion 905. In a normal state, the end 900e of the restriction protrusion 900 is not in contact with the first side wall 203 of the reformer 200 and a clearance ΔL is generated between the end 900e and the first side wall 203. Therefore, heat generated by the reforming reaction of the reforming portion 205 is restricted from transmitting via the restriction protrusion 900 to the cathode gas flow passage member 600. In addition, the temperature of the reformer 200 may be stably maintained. The reforming reaction is an endoergic reaction; therefore, it is not appropriate for the temperature of the reformer 200 to decline.

For example, when the end 900e of the restriction protrusion 900 is brought into contact with the first side wall 203 of the reformer 200 because of the occurrence of excessive assembling errors or strain, the heat of the reformer 200 conducting the reforming reaction may transmit via the restriction protrusion 900 to the cathode gas flow passage member 600. According to the first embodiment, the width dimension T1 of the restriction protrusion 900 is designed to be smaller at the first side adjacent to the reformer 200 than the second side located at the cathode gas flow passage member 600. Accordingly, even when the end 900e of the restriction protrusion 900 is brought into contact with the first side wall 203 of the reformer 200, an area of thermal contact between the restriction protrusion 900 and the first side wall 203 of the reformer 200 may be minimized. Therefore, the heat of the reformer 200 is restricted from transmitting via the restriction protrusion 900 to the cathode gas flow passage member 600. Accordingly, the heat of the reformer 200 is restricted from being removed from the reformer 200 via the restriction protrusion 900 by the cathode gas flow passage member 600. Consequently, the temperature of the reformer 200 conducting the reforming reaction (endoergic reaction) is appropriately maintained. As a result, the reformer 200 appropriately conducts the reforming reaction and may therefore stably generate the anode gas.

As seen from Fig. 2, the starting end 200a and the terminal end 200c of the reformer 200 are fixed to and restrained by the end plate 809 of the housing 800 via the welding portions 245 of the pipe 240 and the welding portions 247 of the sensor insertion pipe 248. However, a restrained condition of the connecting portion 200m on an opposite side of the starting end 200a and the terminal end 200c as seen in the horizontal direction in Fig. 2, is low compared to the restrained condition of the starting end 200a and the terminal end 200c by the end plate 809. Accordingly, for example, in the occurrence of excessive assembling errors or strain because of thermal expansion or thermal deformation during the operation of the fuel cell apparatus, the connecting portion 200m of the reformer 200 may be deformed to shift relative to the cathode gas flow passage member 600.

As illustrated in Fig. 2, the restriction protrusions 900 are formed at an end portion 600m of the cathode gas flow passage member 600 so as to be positioned at an opposite side from the starting end 200a and the terminal end 200c of the reformer 200 in the horizontal direction (i.e., the restriction protrusions 900 are formed at the end portion 600m facing the connecting portion 200m of the reformer 200). Accordingly, at the end portion 600m positioned at the opposite side from the starting end 200a and the terminal end 200c of the reformer 200, shifting of the relative position between the reformer 200 and the cathode gas flow passage member 600 may be effectively restricted.

Further, as seen from Fig. 2, the restriction protrusions 900 are arranged not at a whole portion of the cathode gas flow passage member 600 in the direction N (corresponding to a longitudinal direction of the fuel cell apparatus) but at a portion of the cathode gas flow passage member 600 In the direction N. That is, each of the restriction protrusions 900 provided at the cathode gas flow passage member 600 occupies only a small portion of a space of the first intermediate exhaust gas flow passage 303. Therefore, the combustion exhaust gas may not be disturbed by the restriction protrusion 900 from flowing from the first intermediate exhaust gas flow passage 303 (having the first flow passage width L1) to the exhaust gas flow passage 400.

As seen from Fig. 1, the restriction protrusions 900 are approximately symmetrically arranged relative to an imaginary center line PA passing through a center of the cathode gas flow passage member 600 along the vertical direction H. The first intermediate exhaust gas flow passages 303 are approximately symmetrically arranged relative to the imaginary center line PA. The cathode gas flow passage member 600 is approximately symmetrically arranged relative to the imaginary center line PA. The reformer 200 is approximately symmetrically arranged relative to the imaginary center line PA. In addition, the stacks 250 are approximately symmetrically arranged relative to the imaginary center line PA. Further, the cathode gas flow passage 500 is approximately symmetrically arranged relative to the imaginary center line PA and the exhaust gas flow passage 400 is approximately symmetrically arranged relative to the imaginary center line PA. Furthermore, the second intermediate exhaust gas flow passages 304 are approximately symmetrically arranged relative to the imaginary center line PA and the combustion portions 300 are approximately symmetrically arranged relative to the imaginary center line PA.

In addition, the first and second flow passage widths L1 and L2 described above in the first embodiment may be designed accordingly, for example, depending on a size of the cathode gas flow passage member 600, a flow rate of the cathode gas flowing through the cathode gas flow passage member 600, a type of the stack 250, and an output power of the power generating operation of the fuel cell apparatus.

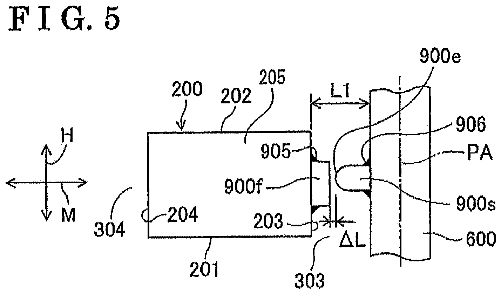

A second embodiment of the disclosure will be described as follows with reference to Fig. 5. The fuel cell apparatus according to the second embodiment basically has configurations and effects similar to those of the first embodiment. Differences of the second embodiment from the first embodiment will be mainly explained. As illustrated in Fig. 5, the restriction protrusion 900 includes a first restriction protruding portion 900f fixed by the welding portion 905 to the first side wall 203 of the reformer 200 and a second restriction protruding portion 900s fixed by a welding portion 906 to the cathode gas flow passage member 600. The second restriction protruding portion 900s is configured to be gradually thin toward the end 900e. In a normal state, the first restriction protruding portion 900f and the second restriction protruding portion 900s are not in contact with each other and a clearance ΔL is generated therebetween. Therefore, the heat of the reformer 200 is restricted from being taken by the cathode gas flow passage member 600 and thus the temperature of the reformer 200 may be maintained. The combustion exhaust gas being at high temperature and flowing through the first intermediate exhaust gas flow passage 303 thermally makes contact with the first restriction protruding portion 900f. Accordingly, the heat of the combustion exhaust gas at high temperature may transmit via the first restriction protruding portion 900f to the reformer 200. In the second embodiment, even in a case where assembling errors at the time of assembling of the fuel cell apparatus occur or even in a case where excessive strain is generated because of thermal expansion or thermal deformation during the operation of the fuel cell apparatus, the first restriction protruding portion 900f and the second restriction protruding portion 900s make contact with each other. Consequently, a further displacement of the reformer 200 in the direction M is restricted, thereby restricting or minimizing the variations of the first flow passage width L1 of the first intermediate exhaust gas flow passage 303.

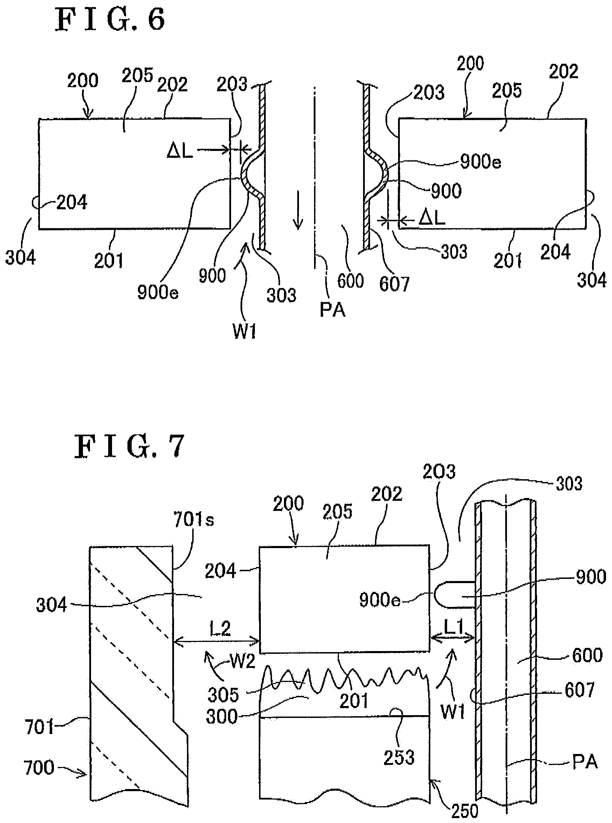

A third embodiment of the disclosure will be described as follows with reference to Fig. 6. The fuel cell apparatus according to the third embodiment basically has configurations and effects similar to those of the first embodiment. Differences of the third embodiment from the first embodiment will be mainly explained. As illustrated in Fig. 6, the restriction protrusions 900 are locally formed at the vertical walls 607 of the cathode gas flow passage member 600. Each of the restriction protrusions 900 protrudes toward the first side wall 203 of the reformer 200. In a normal state, the end 900e of the restriction protrusion 900 is not in contact with the first side wall 203 and a clearance ΔL is generated between the end 900e and the first side wall 203.

A fourth embodiment of the disclosure will be described as follows with reference to Fig. 7. The fuel cell apparatus according to the fourth embodiment has configurations and effects similar to those of the first embodiment. Differences of the fourth embodiment from the first embodiment will be mainly explained. As illustrated in Fig. 7, a relation between the first flow passage width L1 of the first intermediate exhaust gas flow passage 303 and the second flow passage width L2 of the second intermediate exhaust gas flow passage 304 is set based on, for example, a type, usage, and required conditions of the fuel cell apparatus so that the first flow passage width L1 is smaller than the second flow passage width L2 (L1 < L2). The relation between the first flow passage width L1 and the second flow passage width L2 is set at the time of designing or manufacturing of the fuel cell apparatus. Alternatively, the relation between the first flow passage width L1 and the second flow passage width L2 may be set accordingly. Further, a ratio of the first flow passage width L1 relative to the second flow passage width L2 may be set in a range from 0.1 to 0.9 and is not limited to such range. The extent of preheating the cathode gas flowing through the cathode gas flow passage member 600 (a temperature of the cathode gas to be supplied to the cathode of the stack 250) influences the cathode of the stack 250. In addition, the extent of preheating the cathode gas flowing through the cathode gas flow passage member 600 influences a temperature of the stack 250 and further influences power generation performance, durability, and the like of the stack 250.

In the condition where the first flow passage width L1 is smaller than the second flow passage width L2, a flow rate per unit time of the exhaust gas discharged from the first intermediate exhaust gas flow passage 303 and flowing in a direction indicated by an arrow W1 in Fig. 7 may be relatively decreased. In such case, an amount of the heat of the combustion exhaust gas for preheating the cathode gas in the cathode gas flow passage member 600 (i.e., the cathode gas in a state right before being supplied to the cathode of the stack 250) may be relatively decreased. That is, a preheating temperature for preheating the cathode gas in a state right before being supplied to the cathode may be set to be relatively low. In addition, a surface of the heat insulating side layer 701 includes a facing area facing the second side wall 204 of the reformer 200, and a recessed portion 701s is formed at the facing area of the heat insulating side layer 701 in order to increase the second flow passage width L2 while the fuel cell apparatus is intended to be downsized.

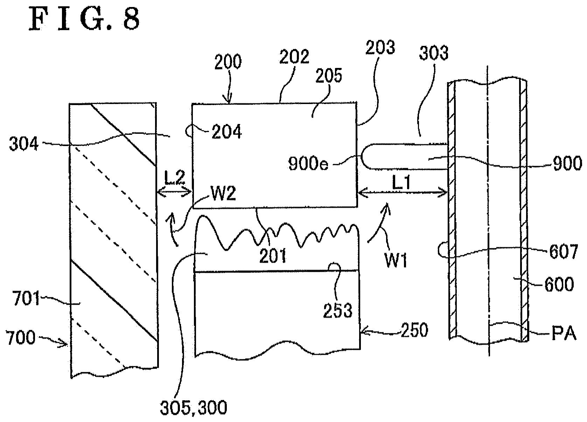

A fifth embodiment of the disclosure will be described as follows with reference to Fig. 8. The fuel cell apparatus according to the fifth embodiment has configurations and effects similar to those of the first embodiment. Differences of the fifth embodiment from the first embodiment will be mainly explained. As illustrated in Fig. 8, the relation between the first flow passage width L1 of the first intermediate exhaust gas flow passage 303 and the second flow passage width L2 of the second intermediate exhaust gas flow passage 304 is set based on, for example, a type, usage, and required conditions of the fuel cell apparatus so that the second flow passage width L2 is smaller than the first flow passage width L1 (L2 < L1). The extent of preheating the cathode gas flowing through the cathode gas flow passage member 600 (a temperature of the cathode gas in a state right before being supplied to the cathode of the stack 250) influences the cathode of the stack 250. In addition, the extent of preheating the cathode gas flowing through the cathode gas flow passage member 600 influences the temperature of the stack 250 and further influences the power generation performance, the durability, and the like of the stack 250. In the condition where the second flow passage width L2 is smaller than the first flow passage width L1, the flow rate per unit time of the exhaust gas discharged from the first intermediate exhaust gas flow passage 303 in a direction indicated by an arrow W1 in Fig. 8 (i.e., in a direction W1) may be relatively increased. In such case, an amount of the heat of the combustion exhaust gas discharged from the first intermediate exhaust gas flow passage 303 in the direction W1, for preheating the cathode gas in the cathode gas flow passage member 600 (i.e., the cathode gas in a state right before being supplied to the cathode of the stack 250) may be relatively increased. That is, a preheating temperature for preheating the cathode gas may be set to be relatively high.

The aforementioned embodiments may be modified as long as the embodiments do not depart from the scope of the disclosure as defined in the claims. The fuel cell is not limited to a solid oxide fuel cell and may be a solid polymer fuel cell, a phosphoric acid fuel cell, or a molten carbonate fuel cell. The source gas (fuel gas) supplied to the reformer 200 may be, for example, city gas, propane gas, biogas, LPG, and CNG.

## Claims

1. A fuel cell apparatus, comprising:
a reformer (200) generating an anode gas including hydrogen, by reforming a source gas;
a fuel cell stack (250) arranged below the reformer (200), the fuel cell stack (250) to which the anode gas generated by the reformer (200) and a cathode gas are supplied and which generates electricity by the anode gas and the cathode gas;
a combustion portion (300) heating the reformer (200) to a temperature range suitable for a reforming reaction by burning an anode-off gas discharged from the fuel cell stack (250);
an exhaust gas flow passage (400) through which a combustion exhaust gas generated by combustion of the anode-off gas in the combustion portion (300) is discharged to an outside of the fuel cell apparatus;
a cathode gas flow passage member (600) which extends in an upward and downward direction and through which the cathode gas to be supplied to the fuel cell stack (250) flows;
a first intermediate exhaust gas flow passage (303) formed between the reformer (200) and the cathode gas flow passage member (600) to bring the combustion portion (300) and the exhaust gas flow passage (400) into communication with each other, the first intermediate exhaust gas flow passage (303) through which the combustion exhaust gas generated by the combustion of the anode-off gas in the combustion portion (300) is discharged to the exhaust gas flow passage (400); and
a housing (800) accommodating the reformer (200), the fuel cell stack (250), the combustion portion (300), the cathode gas flow passage member (600), and the first intermediate exhaust gas flow passage (303), wherein
the reformer (200) includes reforming portions (205) facing each other while keeping a distance (DA) therebetween, and a connecting portion (200m) connecting the reforming portions (205) to each other so as to form a substantially U-shape opened horizontally in cross section,
**characterized in that**
restriction protrusions (900) are formed at an end portion (600m) of the cathode gas flow passage member (600) facing the connecting portion (200m) of the reformer (200) so as to be positioned at an opposite side from a starting end (200a) and a terminal end (200c) of the reformer (200) in the horizontal direction, said restriction protrusions (900) having a first side adjacent to the reformer (200) and a second side provided at the cathode gas flow passage member (600) and said restriction protrusions (900) being capable of restricting a relative position between the cathode gas flow passage member (600) and the reformer (200) in a direction (M) perpendicular to a vertical direction (H) of the housing (800) in a cross section taken along the vertical direction (H), and restricting a variation of a first flow passage width (L1) of the first intermediate exhaust gas flow passage (303) formed between the reformer (200) and the cathode gas flow passage member (600), wherein
the restriction protrusions (900) are arranged only at the end portion (600m) of the cathode gas flow passage member (600), not at a whole portion of the cathode gas flow passage member (600), and
in the cross section of the housing (800) taken along the vertical direction (H), the restriction protrusions (900), the first intermediate exhaust gas flow passage (303), the cathode gas flow passage member (600), the reformer (200), and the fuel cell stack (250) are symmetrically formed relative to an imaginary center line (PA) passing through a center of the cathode gas flow passage member (600) along the vertical direction (H).

2. The fuel cell apparatus according to Claim 1, wherein a width (T1) of the restriction protrusions (900) is designed to be smaller at the first side adjacent to the reformer (200) than at the second side provided at the cathode gas flow passage member (600).

3. The fuel cell apparatus according to Claim 1 or 2, further comprising:
a heat insulating layer (700) arranged at an opposite side of the cathode gas flow passage member (600) from the reformer (200); and
a second intermediate exhaust gas flow passage (304) formed between the reformer (200) and the heat insulating layer (700) to bring the combustion portion (300) and the exhaust gas flow passage (400) into communication with each other, the second intermediate exhaust gas flow passage (304) through which the combustion exhaust gas generated by the combustion of the anode-off gas in the combustion portion (300) is discharged to the exhaust gas flow passage (400), the second intermediate exhaust gas flow passage (304) including a second flow passage width (L2) in the cross section.

4. The fuel cell apparatus according to Claim 1 or 3, wherein the first flow passage width (L1) of the first intermediate exhaust gas flow passage (303) and the second flow passage width (L2) of the second intermediate exhaust gas flow passage (304) are set to be any one of a relation that the first flow passage width (L1) is equal to the second flow passage width (L2), a relation that the first flow passage width (L1) is greater than the second flow passage width (L2), and a relation that the first flow passage width (L1) is smaller than the second flow passage width (L2).

## Patentansprüche

1. Brennstoffzellenvorrichtung, mit:
einem Reformer (200), der durch Reformieren eines Ausgangsgases ein wasserstoffhaltiges Anodengas erzeugt;
einem Brennstoffzellenstapel (250), der unterhalb des Reformers (200) angeordnet ist, dem das vom Reformer (200) erzeugte Anodengas und ein Kathodengas zugeführt werden und der durch das Anodengas und das Kathodengas Elektrizität erzeugt;
einem Verbrennungsabschnitt (300), der den Reformer (200) durch Verbrennen eines Anodenabgases, das vom Brennstoffzellenstapel (250) abgegeben wird, auf einen Temperaturbereich erhitzt, der für eine Reformierreaktion geeignet ist;
einem Abgas-Strömungskanal (400), durch den ein Verbrennungsabgas, das durch Verbrennung des Anodenabgases im Verbrennungsabschnitt (300) erzeugt wird, zu einer Außenseite der Brennstoffzellenvorrichtung abgegeben wird;
einem Kathodengas-Strömungskanalbauteil (600), das sich in einer nach oben und unten gehenden Richtung erstreckt und durch das das Kathodengas strömt, das dem Brennstoffzellenstapel (250) zuzuführen ist;
einem ersten dazwischenliegenden Abgas-Strömungskanal (303), der zwischen dem Reformer (200) und dem Kathodengas-Strömungskanalbauteil (600) angeordnet ist, um den Verbrennungsabschnitt (300) und den Abgas-Strömungskanal (400) miteinander in Verbindung zu bringen, und durch den das Verbrennungsabgas, das durch die Verbrennung des Anodenabgases im Verbrennungsabschnitt (300) erzeugt wird, zum Abgas-Strömungskanal (400) abgegeben wird; und
einem Gehäuse (800), das den Reformer (200), den Brennstoffzellenstapel (250), den Verbrennungsabschnitt (300), das Kathodengas-Strömungskanalbauteil (600) und den ersten dazwischenliegenden Abgas-Strömungskanal (303) beherbergt, wobei
der Reformer (200) Reformierabschnitte (205), die einander zugewandt sind, während ein Abstand (DA) zwischen ihnen eingehalten wird, und einen Verbindungsabschnitt (200m) aufweist, der die Reformierabschnitte (205) so miteinander verbindet, dass sie im Wesentlichen eine U-Form bilden, die im Querschnitt horizontal geöffnet ist,
**dadurch gekennzeichnet, dass**
an einem Endabschnitt (600m) des Kathodengas-Strömungskanalbauteils (600), der dem Verbindungsabschnitt (200m) des Reformers (200) zugewandt ist, Einschränkungsvorsprünge (900) so ausgebildet sind, dass sie von einem Anfangsende (200a) und einem Abschlussende (200c) des Reformers (200) aus in der Horizontalrichtung an einer gegenüberliegenden Seite positioniert sind, wobei die Einschränkungsvorsprünge (900) eine erste Seite, die an den Reformer (200) angrenzt, und eine zweite Seite haben, die am Kathodengas-Strömungskanalbauteil (600) vorgesehen ist, und die Einschränkungsvorsprünge (900) dazu imstande sind, eine relative Position zwischen dem Kathodengas-Strömungskanalbauteil (600) und dem Reformer (200) in einer Richtung (M) zu einzuschränken, die zu einer Vertikalrichtung (H) des Gehäuses (800) in einem Querschnitt entlang der Vertikalrichtung (H) senkrecht ist, und eine Veränderung einer ersten Strömungskanalbreite (L1) des ersten dazwischenliegenden Abgas-Strömungskanals (303) einzuschränken, der zwischen dem Reformer (200) und dem Kathodengas-Strömungskanalbauteil (600) ausgebildet ist, wobei
die Einschränkungsvorsprünge (900) nur an dem Endabschnitt (600m) des Kathodengas-Strömungskanalbauteils (600), nicht an einem ganzen Abschnitt des Kathodengas-Strömungskanalbauteils (600) angeordnet sind und
die Einschränkungsvorsprünge (900), der erste dazwischenliegende Abgas-Strömungskanal (303), das Kathodengas-Strömungskanalbauteil (600), der Reformer (200) und der Brennstoffzellenstapel (250) in dem Querschnitt des Gehäuses (800) entlang der Vertikalrichtung (H) bezüglich einer gedachten Mittellinie (PA), die entlang der Vertikalrichtung (H) durch eine Mitte des Kathodengas-Strömungskanalbauteils (600) geht, symmetrisch ausgebildet sind.

2. Brennstoffzellenvorrichtung nach Anspruch 1, wobei eine Breite (T1) der Einschränkungsvorsprünge (900) so konzipiert ist, dass sie auf der ersten Seite, die an den Reformer (200) angrenzt, kleiner als auf der zweiten Seite ist, die am Kathodengas-Strömungskanalbauteil (600) vorgesehen ist.

3. Brennstoffzellenvorrichtung nach Anspruch 1 oder 2, mit außerdem:
einer Wärmeisolationsschicht (700), die vom Reformer (200) aus auf einer gegenüberliegenden Seite des Kathodengas-Strömungskanalbauteils (600) angeordnet ist; und
einem zweiten dazwischenliegenden Abgas-Strömungskanal (304), der zwischen dem Reformer (200) und der Wärmeisolationsschicht (700) ausgebildet ist, um den Verbrennungsabschnitt (300) und den Abgas-Strömungskanal (400) miteinander in Verbindung zu bringen, wobei durch den zweiten dazwischenliegenden Abgas-Strömungskanal (304) das Verbrennungsabgas, das durch die Verbrennung des Anodenabgases im Verbrennungsabschnitt (300) erzeugt wird, zum Abgas-Strömungskanal (400) abgegeben wird und der zweite dazwischenliegende Abgas-Strömungskanal (304) in dem Querschnitt eine zweite Strömungskanalbreite (L2) aufweist.

4. Brennstoffzellenvorrichtung nach Anspruch 1 oder 3, wobei die erste Strömungskanalbreite (L1) des ersten dazwischenliegenden Abgas-Strömungskanals (303) und die zweite Strömungskanalbreite (L2) des zweiten dazwischenliegenden Abgas-Strömungskanals (304) so eingestellt sind, dass sie eine sind von einer Beziehung, dass die erste Strömungskanalbreite (L1) gleich der zweiten Strömungskanalbreite (L2) ist, einer Beziehung, dass die erste Strömungskanalbreite (L1) größer als die zweite Strömungskanalbreite (L2) ist, oder einer Beziehung, dass die erste Strömungskanalbreite (L1) kleiner als die zweite Strömungskanalbreite (L2) ist.

## Revendications

1. Appareil à pile à combustible comprenant :
un reformeur (200) générant un gaz d'anode incluant de l'hydrogène, par reformage d'un gaz source ;
un empilement de pile à combustible (250) disposé sous le reformeur (200), l'empilement de pile à combustible (250) auquel le gaz d'anode généré par le reformeur (200) et un gaz de cathode sont apportés et qui génère de l'électricité par le gaz d'anode et le gaz de cathode ;
une partie de combustion (300) chauffant le reformeur (200) jusqu'à une plage de températures appropriée pour une réaction de reformage par combustion d'un gaz de rejet d'anode évacué depuis l'empilement de pile à combustible (250) ;
un passage d'écoulement de gaz d'échappement (400) à travers lequel un gaz d'échappement de combustion généré par la combustion du gaz de rejet d'anode dans la partie de combustion (300) est évacué jusqu'à un côté extérieur de l'appareil à pile à combustible ;
un membre de passage d'écoulement de gaz de cathode (600) qui s'étend dans une direction ascendante et descendante et à travers lequel le gaz de cathode destiné à être apporté à l'empilement de pile à combustible (250) s'écoule ;
un premier passage d'écoulement de gaz d'échappement intermédiaire (303) formé entre le reformeur (200) et le membre de passage d'écoulement de gaz de cathode (600) pour amener la partie de combustion (300) et le passage d'écoulement de gaz d'échappement (400) en communication l'un avec l'autre, le premier passage d'écoulement de gaz d'échappement intermédiaire (303) à travers lequel le gaz d'échappement de combustion généré par la combustion du gaz de rejet d'anode dans la partie de combustion (300) est évacué jusqu'au passage d'écoulement de gaz d'échappement (400) ; et
un boîtier (800) recevant le reformeur (200), l'empilement de pile à combustible (250), la partie de combustion (300), le membre de passage d'écoulement de gaz de cathode (600) et le premier passage d'écoulement de gaz d'échappement intermédiaire (303), où
le reformeur (200) inclut des parties de reformage (205) tournées l'une vers l'autre tout en maintenant une distance (DA) entre elles, et une partie de liaison (200m) reliant les parties de reformage (205) entre elles de manière à former une forme sensiblement en U ouverte horizontalement en coupe transversale,
**caractérisé en ce que**
des protubérances de limitation (900) sont formées au niveau d'une partie d'extrémité (600m) du membre de passage d'écoulement de gaz de cathode (600) tournée vers la partie de liaison (200m) du reformeur (200) de manière à être positionnées au niveau d'un côté opposé par rapport à une partie initiale (200a) et une partie terminale (200c) du reformeur (200) dans la direction horizontale, lesdites protubérances de limitation (900) ayant un premier côté adjacent au reformeur (200) et un second côté disposé au niveau du membre de passage d'écoulement de gaz de cathode (600) et lesdites protubérances de limitation (900) étant capables de limiter une position relative entre le membre de passage d'écoulement de gaz de cathode (600) et le reformeur (200) dans une direction (M) perpendiculaire à une direction verticale (H) du boîtier (800) dans une coupe transversale prise le long de la direction verticale (H), et limitant une variation d'une première largeur de passage d'écoulement (L1) du premier passage d'écoulement de gaz d'échappement intermédiaire (303) formé entre le reformeur (200) et le membre de passage d'écoulement de gaz de cathode (600), où
les protubérances de limitation (900) sont disposées seulement au niveau de la partie d'extrémité (600m) du membre de passage d'écoulement de gaz de cathode (600), non pas sur une partie entière du membre de passage d'écoulement de gaz de cathode (600), et
dans la coupe transversale du boîtier (800) prise le long de la direction verticale (H), les protubérances de limitation (900), le premier passage d'écoulement de gaz d'échappement intermédiaire (303), le membre de passage d'écoulement de gaz de cathode (600), le reformeur (200) et l'empilement de pile à combustible (250) sont formés symétriquement par rapport à une ligne centrale imaginaire (PA) passant par un centre du membre de passage d'écoulement de gaz de cathode (600) le long de la direction verticale (H).

2. Appareil à pile à combustible selon la revendication 1, où une largeur (T1) des protubérances de limitation (900) est conçue pour être plus petite au niveau du premier côté adjacent au reformeur (200) qu'au niveau du second côté disposé au niveau du membre de passage d'écoulement de gaz de cathode (600).

3. Appareil à pile à combustible selon la revendication 1 ou 2, comprenant en outre :
une couche thermiquement isolante (700) disposée au niveau d'un côté opposé du membre de passage d'écoulement de gaz de cathode (600) par rapport au reformeur (200) ; et
un second passage d'écoulement de gaz d'échappement intermédiaire (304) formé entre le reformeur (200) et la couche thermiquement isolante (700) pour amener la partie de combustion (300) et le passage d'écoulement de gaz d'échappement (400) en communication l'un avec l'autre, le second passage d'écoulement de gaz d'échappement intermédiaire (304) à travers lequel le gaz d'échappement de combustion généré par la combustion du gaz de rejet d'anode dans la partie de combustion (300) est évacué jusqu'au passage d'écoulement de gaz d'échappement (400), le second passage d'écoulement de gaz d'échappement intermédiaire (304) incluant une seconde largeur de passage d'écoulement (L2) en coupe transversale.

4. Appareil à pile à combustible selon la revendication 1 ou 3, où la première largeur de passage d'écoulement (L1) du premier passage d'écoulement de gaz d'échappement intermédiaire (303) et la seconde largeur de passage d'écoulement (L2) du second passage d'écoulement de gaz d'échappement intermédiaire (304) sont fixées pour être l'une quelconque d'une relation selon laquelle la première largeur de passage d'écoulement (L1) est égale à la seconde largeur de passage d'écoulement (L2), d'une relation selon laquelle la première largeur de passage d'écoulement (L1) est plus grande que la seconde largeur de passage d'écoulement (L2) et d'une relation selon laquelle la première largeur de passage d'écoulement (L1) est plus petite que la seconde largeur de passage d'écoulement (L2).
